(19) **Europäisches Patentamt / European Patent Office / Office européen des brevets**

(11) **EP 4 696 790 A1**

(12) # EUROPEAN PATENT APPLICATION

(43) Date of publication:
18.02.2026 Bulletin 2026/08

(21) Application number: 25194908.7

(22) Date of filing: 08.08.2025

(51) International Patent Classification (IPC):
$C22B\ 3/00^{(2006.01)}$    $C22B\ 3/08^{(2006.01)}$
$C22B\ 3/06^{(2006.01)}$    $C22B\ 3/16^{(2006.01)}$
$C22B\ 3/22^{(2006.01)}$    $C22B\ 3/26^{(2006.01)}$
$C22B\ 3/44^{(2006.01)}$    $C22B\ 7/00^{(2006.01)}$
$C22B\ 26/12^{(2006.01)}$    $C22B\ 47/00^{(2006.01)}$
$C22B\ 3/10^{(2006.01)}$    $C22B\ 3/38^{(2006.01)}$
$H01M\ 10/54^{(2006.01)}$

(52) Cooperative Patent Classification (CPC):
H01M 10/54; C22B 3/06; C22B 3/065; C22B 3/08;
C22B 3/10; C22B 3/165; C22B 3/22; C22B 3/26;
C22B 3/38; C22B 3/44; C22B 7/002; C22B 7/007;
C22B 23/0415; C22B 23/0423; C22B 23/043;

(Cont.)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.08.2024 KR 20240107666
03.01.2025 KR 20250001001

(71) Applicant: SK innovation Co., Ltd.
Seoul 03188 (KR)

(72) Inventors:
• PARK, Ji Yun
34124 Daejeon (KR)
• KWON, Soo Jin
34124 Daejeon (KR)
• BAE, Hyun Tae
34124 Daejeon (KR)
• YOO, Su Min
34124 Daejeon (KR)
• LEE, Hyeon Hui
34124 Daejeon (KR)

(74) Representative: Lorenz Seidler Gossel Part. mbB
Widenmayerstr. 23
80538 München (DE)

(54) **METHOD FOR RECOVERING TRANSITION METAL OF LITHIUM SECONDARY BATTERY**

(57) In a method for recovering transition metals from a lithium secondary battery, a lithium-containing mixture is separated from a waste lithium-containing mixture to prepare a transition metal-containing mixture. The transition metal-containing mixture is treated with a first acidic solution to produce a first leachate. Transition metals excluding nickel are extracted from the first leachate to produce a second leachate. The second leachate is treated with a second acidic solution to adjust its pH. A nickel-containing solid is produced from the pH-adjusted second leachate. The nickel recovery yield from waste lithium secondary batteries may be improved.

EP 4 696 790 A1

(52) Cooperative Patent Classification (CPC): (Cont.)
**C22B 23/0438; C22B 26/12; C22B 47/00**

**Description**

[BACKGROUND OF THE INVENTION]

1. Field of the Invention

The present invention relates to a method for recovering transition metals from a lithium secondary battery, and more specifically, relates to a method for recovering transition metals from waste lithium ions.

2. Description of the Related Art

A secondary battery is a battery that can be repeatedly charged and discharged, and has been widely applied to various portable electronic communication devices such as camcorders, mobile phones, and laptop computers with rapid progress of information and communication technology and display industries. Examples of the secondary battery may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

The lithium secondary battery may include: an electrode assembly including a cathode, an anode, and a separation membrane (separator); and an electrolyte in which the electrode assembly is impregnated. In addition, the lithium secondary battery may further include, for example, a pouch-type outer case that houses the electrode assembly and the electrolyte.

A lithium metal oxide may be used as a cathode active material of the lithium secondary battery. The lithium metal oxide may further contain a transition metal such as nickel, cobalt, or manganese.

The lithium metal oxide as the cathode active material may be prepared by reacting a lithium precursor with a nickel-cobalt-manganese (NCM) precursor containing nickel, cobalt and manganese.

As the above-described expensive precious metals are used for the cathode active material, more than 20% of the manufacturing cost is spent on preparing a cathode material. In addition, as environmental protection issues have recently gained attention, research on methods for recycling cathode active materials is being conducted. In order to recycle the cathode active material, it is necessary to regenerate the lithium precursor from a used cathode with high efficiency and high purity.

[SUMMARY OF THE INVENTION]

An object of the present disclosure is to provide a method for recovering transition metals from a waste lithium-containing compound with high purity and high yield.

In a method for recovering transition metals from a lithium secondary battery according to the embodiments of the present disclosure, a lithium-containing mixture is separated from a waste lithium-containing mixture to prepare a transition metal-containing mixture. The transition metal-containing mixture is treated with a first acidic solution to produce a first leachate. Transition metals excluding nickel are extracted from the first leachate to produce a second leachate. The second leachate is treated with a second acidic solution to adjust its pH. A nickel-containing solid is produced from the pH-adjusted second leachate.

According to exemplary embodiments, the step of adjusting the pH may include adjusting the pH of the second leachate to less than 2.

In some embodiments, the step of adjusting the pH may include adjusting the pH of the second leachate to 1 or less.

According to exemplary embodiments, the second acidic solution used in the step of adjusting the pH may include sulfuric acid.

According to exemplary embodiments, the second leachate may include lithium, and a content of the lithium may be 0.4% by weight or less based on a total weight of the second leachate.

In some embodiments, the content of the lithium may be less than 0.2% by weight based on the total weight of the second leachate.

According to exemplary embodiments, the second leachate may include sodium, and a content of the sodium may be 0.4% by weight or less based on the total weight of the second leachate.

In some embodiments, the content of the sodium may be less than 0.2% by weight based on the total weight of the second leachate.

According to exemplary embodiments, the step of separating a lithium-containing mixture from the waste lithium-containing mixture to prepare a transition metal-containing mixture may include: performing hydrogen reduction treatment on the waste lithium-containing mixture to prepare a preliminary precursor mixture including a lithium-containing mixture and a transition metal-containing mixture; and separating the lithium-containing mixture from the preliminary precursor mixture to produce the transition metal-containing mixture.

According to exemplary embodiments, in the step of extracting a transition metal excluding nickel from the first leachate to produce a second leachate, the transition metal excluding nickel may be extracted by a transition metal extractant preloaded with nickel.

According to exemplary embodiments, the transition metal extractant preloaded with nickel may be produced by adding a nickel salt to a saponified transition metal extractant.

According to exemplary embodiments, a ratio of the volume of the transition metal extractant preloaded with nickel to the volume of the first leachate may be 1.2 to 2.0.

According to exemplary embodiments, the step of producing a nickel-containing solid may include varying the temperature of the second leachate.

According to exemplary embodiments, the transition metal excluding nickel may include one or more of manganese and cobalt.

According to exemplary embodiments, the step of extracting a transition metal excluding nickel from the first leachate to produce a second leachate may include sequentially extracting manganese and cobalt.

According to exemplary embodiments, the method may further include adding a basic salt to the first leachate to remove impurities.

In some embodiments, a metal fluoride may further be added to the first leachate.

According to the above-described exemplary embodiments, a transition metal-containing mixture may be prepared from a waste lithium-containing mixture, and the transition metal-containing mixture may be treated with an acidic solution to produce a first leachate. A transition metal excluding nickel may be extracted from the first leachate to produce a second leachate. The pH of the second leachate may be controlled. As the pH of the second leachate is controlled, the recovery yield and purity of nickel may be improved.

In some embodiments, the second leachate may include lithium and/or sodium. The content(s) of lithium and/or sodium included in the second leachate may be controlled. The recovery yield of nickel may further be improved by adjusting the pH of the second leachate having the controlled content of lithium and/or sodium, using an acidic solution.

In some embodiments, a lithium-containing mixture may be separated from the waste lithium-containing mixture to prepare a transition metal-containing mixture. The lithium-containing mixture may be first separated from the waste lithium-containing mixture, thereby reducing the lithium content in the first leachate and the second leachate.

In some embodiments, transition metals excluding nickel included in the first leachate may be extracted by the transition metal extractant preloaded with nickel. As the transition metal extractant preloaded with nickel is used, no additional process or additional extractant is required for extracting nickel, so that transition metals can be recovered efficiently. In addition, as the transition metal extractant preloaded with nickel is used, an increase in the concentration of sodium caused by the saponified extractant may be suppressed, thereby reducing the sodium content included in the second leachate.

[BRIEF DESCRIPTION OF THE DRAWINGS]

The above and other objects, features and other advantages of the present disclosure will be more clearly understood from the following detailed description taken in conjunction with the accompanying drawing, in which:

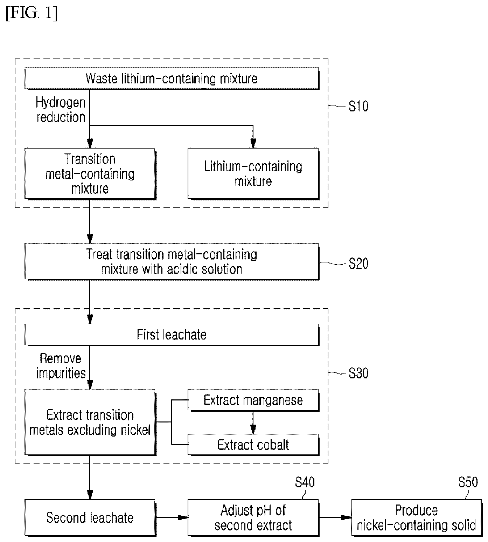

FIG. 1 is a schematic flowchart for describing a method for recovering transition metals from a lithium secondary battery according to exemplary embodiments.

[DETAILED DESCRIPTION OF THE INVENTION]

Embodiments of the present disclosure provide a method for recovering transition metals from a waste lithium-containing mixture.

Hereinafter, the embodiments of the present disclosure will be described in detail with reference to the accompanying drawings.

As used herein, the term "precursor" is used to broadly refer to a compound containing a specific metal for providing the specific metal included in the electrode active material.

As used herein, the terms "first" and "second" are intended solely for distinction and do not limit the order, type, form, etc.

FIG. 1 is a schematic flowchart for describing a method for recovering transition metals from a lithium secondary battery according to exemplary embodiments.

Referring to FIG. 1, a waste lithium-containing mixture may be prepared. The waste lithium-containing mixture may include a lithium-containing compound obtained or regenerated from an electrical device or a chemical device. Non-limiting examples of the waste lithium-containing mixture may include various lithium-containing compounds such as lithium oxide, lithium carbonate, lithium hydroxide, etc.

According to exemplary embodiments, a transition metal-containing mixture and a lithium-containing mixture are separated from the waste lithium-containing mixture (e.g., step S10).

According to exemplary embodiments, the waste lithium-containing mixture may include a cathode active material mixture obtained from a waste lithium secondary battery.

The waste lithium secondary battery may include an electrode assembly including a cathode, an anode and a separation membrane interposed between the cathode and the anode. The cathode and the anode may include a cathode active material layer and an anode active material layer coated on a cathode current collector and an anode current collector, respectively.

For example, the cathode active material included in the cathode active material layer may include an oxide containing lithium and transition metals.

In some embodiments, the cathode active material may include a compound represented by Formula 1 below.

$$[\text{Formula 1}] \qquad Li_xM1_aM2_bM3_cO_y$$

In Formula 1, M1, M2, and M3 may be transition metals selected from Ni, Co, Mn, Na, Mg, Ca, Ti, V, Cr, Cu, Zn, Ge, Sr, Ag, Ba, Zr, Nb, Mo, Al, Ga or B. In Formula 1, x, y, a, b and c may satisfy $0<x\leq1.1$, $2\leq y\leq2.02$, $0<a<1$, $0<b<1$, $0<c<1$, $0<a+b+c\leq1$.

In some embodiments, the cathode active material may be an NCM-based lithium oxide including nickel, cobalt and manganese.

The NCM-based lithium oxide as the cathode active material may be prepared by reacting a lithium precursor with an NCM precursor (e.g., an NCM oxide) through a reaction such as co-precipitation. However, the embodiments of the present disclosure may be applicable not only to a cathode material including the NCM-based lithium oxide, but also to lithium-containing cathode materials in general.

For example, the cathode may be separated from the waste lithium secondary battery to recover the waste cathode.

The cathode may include the cathode current collector (e.g., aluminum (Al)) and the cathode active material layer as described above, and the cathode active material layer may include a conductive material and a binder together with the above-described cathode active material.

The conductive material may include carbon-based conductive materials such as graphite, carbon black, acetylene black, Ketjen black, graphene, carbon nanotubes (CNTs), vapor-grown carbon fibers (VGCFs), carbon fibers, and/or metal-based conductive materials, including perovskite materials, such as tin, tin oxide, titanium oxide, $LaSrCoO_3$, and $LaSrMnO_3$.

The binder may include, for example, polyvinylidene fluoride (PVDF), poly(vinylidene fluoride-co-hexafluoropropylene), polyacrylonitrile, polymethylmethacrylate, acrylonitrile butadiene rubber (NBR), poly(butadiene) rubber (BR), styrene-butadiene rubber (SBR) and the like.

A cathode active material mixture may be prepared from the recovered waste cathode. In some embodiments, the cathode active material mixture may be prepared in a powder form from the waste cathode using a physical method such as pulverization. The cathode active material mixture includes powder of an oxide containing lithium and transition metals as described above, and may include, for example, an NCM-based lithium oxide powder (e.g., $Li(NCM)O_2$).

From the cathode active material mixture, a preliminary precursor mixture including a lithium-containing mixture and a transition metal-containing mixture may be prepared. The preliminary precursor mixture may be washed with water to separate the lithium-containing mixture.

According to exemplary embodiments, the cathode active material mixture may be subjected to hydrogen reduction to prepare a lithium-containing mixture including lithium hydroxide.

For example, the cathode active material mixture may be introduced into a fluidized bed reactor and hydrogen gas may be injected into the fluidized bed reactor from its lower portion. A cyclone may be formed from the lower portion of the fluidized bed reactor by the hydrogen gas, and the lithium-containing mixture may be generated upon contact with the cathode active material mixture.

According to exemplary embodiments, the preliminary precursor mixture may include a hydrogen reduction reactant of the oxide containing lithium and transition metals included in the cathode active material mixture. When an NCM-based lithium oxide is used as the oxide containing lithium and transition metals, the preliminary precursor mixture may include a lithium-containing mixture and a transition metal-containing mixture.

The lithium-containing mixture may include lithium hydroxide, lithium oxide, and/or lithium carbonate.

The transition metal-containing mixture may include Ni, Co, NiO, CoO, MnO, etc.

The hydrogen reduction reaction may be performed at a temperature of about 400°C to 700°C, preferably 450°C to 550°C.

According to exemplary embodiments, the preliminary precursor mixture may be collected and then subjected to water washing.

The lithium-containing mixture included in the preliminary precursor mixture may contain an excess amount of lithium hydroxide as a result of the above-described water washing treatment. For example, lithium oxide and/or lithium carbonate included in the lithium-containing mixture may react with water to form lithium hydroxide, or may be removed through the water washing process.

The transition metal-containing mixture included in the preliminary precursor mixture may be precipitated without dissolving in or reacting with water through the above-described washing treatment.

The precipitate may be collected to prepare a transition metal-containing mixture.

According to exemplary embodiments, the transition metal-containing mixture is treated with a first acidic solution to produce a first leachate (e.g., process S20).

In some embodiments, the first acidic solution may include an acid. The acid may include at least one of an inorganic acid selected from the group consisting of phosphoric acid, sulfuric acid, nitric acid, and halogen acids, and/or at least one of an organic acid selected from the group consisting of acetic acid, oxalic acid, carboxylic acid, citric acid, and malic acid.

In some embodiments, the first acidic solution may include a reducing agent. The reducing agent may include at least one selected from the group consisting of hydrogen peroxide($H_2O_2$), sulfur dioxide ($SO_2$), sodium sulfide ($Na_2S$), potassium sulfite ($KSO_3$), hydrogen sulfide ($H_2S$), and sodium bisulfite ($NaHSO_3$).

In some embodiments, the first acidic solution may include sulfuric acid. In some embodiments, the first acidic solution and hydrogen peroxide ($H_2O_2$) may be simultaneously introduced. For example, the hydrogen peroxide may serve as a reducing agent to facilitate the leaching of the transition metal.

For example, an amount of the reducing agent used may be 0.5 mole or less per 1 mole of the cathode active material mixture. However, this is exemplary and it is not limited thereto.

By the sulfuric acid included in the first acidic solution, the first leachate may include manganese sulfate ($MnSO_4$), cobalt sulfate ($CoSO_4$), and/or nickel sulfate ($NiSO_4$).

According to exemplary embodiments, a pretreatment process may be performed to remove impurities present in the first leachate. For example, the pretreatment process may include precipitation using a basic salt, filtration, centrifugation, a washing process and the like.

For example, the impurities may include components derived from a current collector, a conductive material, and/or a binder component included in the waste lithium-containing mixture. For example, the impurities may include aluminum, iron, calcium, magnesium, etc.

According to exemplary embodiments, a basic salt may be added to the first leachate to remove impurities.

In some embodiments, the basic salt may include nickel hydroxide ($Ni(OH)_2$). For example, nickel in the nickel hydroxide may be exchanged with aluminum and/or iron included in the impurities, thereby allowing the removal of aluminum and/or iron precipitates formed as a result.

Since byproducts are not generated in the first leachate by removing impurities with nickel hydroxide, the recovery yield of nickel may be improved.

In some embodiments, a metal fluoride may be added to the first leachate to remove impurities. For example, the metal fluoride may include sodium fluoride (NaF). The sodium in the sodium fluoride may be exchanged with calcium or magnesium included in the impurities, thereby allowing the removal of calcium and/or magnesium precipitates formed as a result.

The content of the metal fluoride may be controlled based on the content of calcium and/or magnesium included in the first leachate. For example, the content(s) of calcium and/or magnesium included in the first leachate may be measured, and the content of the metal fluoride to be added may be controlled depending on the measured content(s). For example, if the content of the metal fluoride is not controlled, the content of sodium included in the first leachate may increase, and thus the content of sodium included in the second leachate may increase together. Accordingly, the recovery yield of nickel may be reduced.

As a non-limiting example, the content of calcium or magnesium may be measured using methods such as inductively coupled plasma (ICP) analysis, atomic absorption spectroscopy (AAS) and the like.

In some embodiments, the number of moles of metal fluoride added to the first leachate relative to the total moles of calcium and magnesium included in the first leachate may be 0.8 to 1.2.

Impurities included in the first leachate may be reduced by the metal fluoride added within the above range.

According to exemplary embodiments, transition metals excluding nickel are extracted from the first leachate to produce a second leachate (e.g., process S30).

A transition metal extractant may be used to extract transition metals excluding nickel from the first leachate.

According to exemplary embodiments, the transition metal excluding nickel may include one or more of manganese and cobalt.

According to exemplary embodiments, manganese and cobalt may be extracted sequentially from the first leachate.

In some embodiments, the extraction of transition metals excluding nickel may be performed while gradually increasing the pH. For example, manganese and cobalt may be sequentially extracted as the pH increases.

For example, manganese may be extracted by adding a manganese extractant at a pH range of 3.5 to 4.5. Thereafter, cobalt may be extracted by adding a cobalt extractant at a pH range of 4.5 to 5.5. The manganese extractant may be added to form an organic phase and an aqueous phase, and the organic phase may be separated from the first leachate. Manganese may be included in the organic phase. By adding sulfuric acid to the organic phase from which manganese is extracted, for example, manganese may be extracted or recovered in the form of manganese sulfate. The cobalt extractant may be added to form an organic phase and an aqueous phase, and the organic phase may be separated from the first leachate. Cobalt may be included in the organic phase. By adding sulfuric acid to the organic phase from which cobalt is extracted, for example, cobalt may be extracted or recovered in the form of cobalt sulfate.

For example, the transition metal extractant may include at least one of a phosphoric acid-based extractant, a phosphate-based extractant, a phosphine oxide-based extractant, and a carboxylic acid-based extractant.

For example, the extractant may include at least one of di-2-ethylhexyl phosphoric acid (D2EHPA), bis(2,4,4-trimethylpentyl) phosphinic acid (Cyanex 272), 2-ethylhexyl phosphoric acid mono-2-ethylhexyl ester (PC88A), tributyl phosphate, trioctylphosphine oxide, and alkyl monocarboxylic acid.

In some embodiments, an alkyl phosphate compound may be used as a transition metal extractant for manganese extraction. For example, the alkyl phosphate compound may include di-(2-ethylhexyl) phosphoric acid (D2EHPA).

In some embodiments, an alkyl phosphonic acid or alkyl phosphinic acid compound may be used as a transition metal extractant for cobalt extraction. For example, the alkyl phosphonic acid or alkyl phosphinic acid compound may include 2-ethylhexyl 2-ethylhexylphosphonic acid (PC88A) or bis(2,2,4-trimethylpentyl)phosphinic acid (Cyanex 272).

The transition metal extractant may be saponified. The saponified transition metal extractant may be introduced into the first leachate in a state in which nickel is preloaded.

As the transition metal extractant is introduced in a state in which nickel is preloaded, the formation of a complex including nickel (e.g., $Na_2Ni(SO_4)_2(H_2O)_4$) may be suppressed, and thus the nickel recovery yield may be increased.

For example, a transition metal extractant may be reacted with sodium hydroxide (NaOH) to partially exchange the terminal hydrogen ($H^+$) of the extractant with sodium ($Na^+$), thereby producing a saponified transition metal extractant. For example, a molar amount of sodium hydroxide corresponding to about 50% of the total moles of the transition metal extractant may be reacted to produce a saponified transition metal extractant.

According to exemplary embodiments, the saponified transition metal extractant may be reacted with a nickel salt to produce a transition metal extractant preloaded with nickel.

For example, a nickel sulfate ($NiSO_4$) may be reacted with the saponified transition metal extractant as a nickel salt to partially exchange the sodium ($Na^+$) of the saponified extractant with nickel ($Ni^{2+}$), thereby producing a transition metal extractant preloaded with nickel. For example, nickel sulfate corresponding to about 50% of the total moles of the saponified transition metal extractant may be reacted to produce a transition metal extractant preloaded with nickel.

According to exemplary embodiments, the nickel salt may include at least one selected from the group consisting of nickel sulfate, nickel nitrate, nickel carbonate, nickel acetate, and nickel hydroxide.

In some embodiments, the nickel salt may include nickel sulfate.

According to exemplary embodiments, manganese and cobalt included in the first leachate may be extracted by the transition metal extractant preloaded with nickel.

According to exemplary embodiments, an alkyl phosphate compound preloaded with nickel may be used as a transition metal extractant for manganese extraction among the transition metal extractants preloaded with nickel.

Nickel in the alkyl phosphate compound preloaded with nickel may be exchanged with manganese, meaning the manganese ions may replace the nickel ions in the extractant compound via an ion exchange mechanism because manganese has a higher affinity for the extractant. The manganese ions can form complexes with the transition metal extractant through coordination bonding. Once manganese has displaced nickel, the manganese binds to the transition metal extractant. The nickel ions on the other hand are released from the transition metal extractant into the first leachate. Manganese may be extracted by the transition metal extractant preloaded with nickel, and nickel may be released into the first leachate.

According to exemplary embodiments, alkyl phosphonic acid or an alkyl phosphinic acid compound preloaded with nickel may be used as a transition metal extractant for extracting cobalt among the transition metal extractants preloaded with nickel.

Nickel in the alkyl phosphonic acid or alkyl phosphinic acid compound preloaded with nickel may be exchanged with cobalt, meaning the cobalt ions may replace the nickel ions in the extractant compound via an ion exchange mechanism because cobalt has a higher affinity for the extractant. The cobalt ions can form complexes with the transition metal extractant through coordination bonding. Once cobalt has displaced nickel, the cobalt binds to the transition metal extractant. The nickel ions on the other hand are released from the transition metal extractant into the first leachate. Cobalt may be extracted by the transition metal extractant preloaded with nickel, and nickel may be released into the first leachate.

According to exemplary embodiments, a ratio of the volume of the transition metal extractant preloaded with nickel to the volume of the first leachate may be 1.2 to 2.0.

The volume of the transition metal extractant preloaded with nickel may be controlled within the above range based on the content of the transition metal included in the first leachate and the concentration of the transition metal extractant preloaded with nickel.

For example, the ratio of the volume of the manganese extractant preloaded with nickel to the volume of the first leachate may be 1.2 to 1.7, 1.25 to 1.6, or 1.3 to 1.5. For example, the ratio of the volume of the cobalt extractant preloaded with nickel to the volume of the first leachate may be 1.4 to 2.0, 1.5 to 1.95, or 1.6 to 1.9.

Within the above range, transition metals may be extracted while suppressing the formation of byproducts.

Manganese and cobalt can be extracted and removed from the first leachate by the transition metal extractant as described above to produce a second leachate.

According to exemplary embodiments, the pH of the second leachate is adjusted (e.g., process S40).

According to exemplary embodiments, the pH of the second leachate may be adjusted to less than 2.

The lower pH limit of the second leachate is not limited, but may be, for example, 0.01 or more, 0.05 or more, 0.1 or more, or 0.2 or more.

In some embodiments, the pH of the second leachate may be 1.8 or less, 1.7 or less, 1.5 or less, 1.3 or less, 1 or less, 0.8 or less, or 0.75 or less.

As the pH of the second leachate is controlled within the above range, the solubility of the nickel-containing solid may decrease, thereby improving the crystallization rate of nickel. Therefore, the recovery yield of nickel may further be improved.

If the pH of the second leachate deviates from the above range, it may be difficult to crystallize the increased content of nickel included in the second leachate, and the crystallization rate of nickel may be reduced. In addition, if the pH deviates from the above range, crystallization may be inhibited by certain impurities included in the second leachate.

According to exemplary embodiments, the pH of the second leachate may be adjusted by the second acidic solution. For example, the pH of the second leachate may be adjusted by adding the second acidic solution until the pH of the second leachate reaches a predetermined value.

In some embodiments, the second acidic solution may use the same type of acid solution as the first acidic solution. In some embodiments, the second acidic solution may include sulfuric acid.

The second acidic solution including sulfuric acid may react with nickel to form nickel sulfate, thereby improving the recovery yield of nickel.

According to exemplary embodiments, the second leachate may contain lithium.

For example, lithium included in the second leachate may be derived from residues that were not sufficiently separated from the waste lithium-containing mixture. For example, if the waste lithium-containing mixture is not subjected to hydrogen reduction treatment or is insufficiently treated, the content of lithium contained in the second leachate may increase.

According to exemplary embodiments, the content of lithium may be 0.4 wt% or less based on the total weight of the second leachate.

The lower limit of the content of lithium is not limited, but may be, for example, 0.001 wt% or more, 0.005 wt% or more, 0.007 wt% or more, or 0.01 wt% or more.

In some embodiments, the content of lithium may be 0.35 wt% or less, 0.3 wt% or less, 0.25 wt% or less, 0.2 wt% or less, 0.18 wt% or less, 0.15 wt% or less, or 0.1 wt% or less based on the total weight of the second leachate.

According to exemplary embodiments, the second leachate may include sodium.

For example, the sodium included in the second leachate may be derived from sodium fluoride used for impurity removal. For example, when the content of impurities such as calcium and magnesium in the first leachate is high, the content of sodium included in the second leachate may increase.

According to exemplary embodiments, the content of sodium may be 0.4 wt% or less based on the total weight of the second leachate.

The lower limit of the sodium content is not limited, but may be, for example, 0.001 wt% or more, 0.005 wt% or more, 0.007 wt% or more, or 0.01 wt% or more.

In some embodiments, the sodium content may be 0.35 wt% or less, 0.3 wt% or less, 0.25 wt% or less, 0.2 wt% or less, 0.18 wt% or less, 0.15 wt% or less, or 0.1 wt% or less based on the total weight of the second leachate.

A nickel sulfate complex such as $Na_2Ni(SO_4)_2(H_2O)_4$ may be formed by the lithium or the sodium. Therefore, the formation of the nickel sulfate complex may be suppressed in the second leachate including lithium or sodium within the above range, and thus the purity and recovery yield of the extracted nickel may be improved.

According to exemplary embodiments, the second leachate may include nickel.

In exemplary embodiments, the content of nickel may be 1 wt% to 10 wt% based on the total weight of the second leachate.

In some embodiments, the content of nickel may be 3 wt% to 9.5 wt%, 4 wt% to 9 wt%, 5 wt% to 8.5 wt%, 6 wt% to 8.2 wt%, or 7 wt% to 8 wt% based on the total weight of the second leachate.

For example, the content of nickel included in the second leachate may be adjusted by using the transition metal extractant preloaded with nickel.

In exemplary embodiments, a nickel-containing solid is formed from the second leachate (e.g., process S50).

The nickel-containing solid may be formed by crystallizing nickel included in the second leachate to recover nickel. For example, the nickel-containing solid may be substantially composed of nickel sulfate ($NiSO_4$).

Nickel may be crystallized by varying the temperature of the second leachate. The temperature variation may include both heating and cooling. For example, the temperature change of the second leachate may include heating the second leachate, followed by cooling.

In some embodiments, a nickel-containing solid may be formed solely by varying the temperature of the second leachate. When a nickel-containing solid is formed only through temperature variation, no additional extractant or organic compound is required, and thus the nickel-containing solid may be formed in an environmentally friendly and efficient manner. That is, by first heating and then cooling the second leachate, nickel ions undergo a controlled transformation that favors crystal formation. This way the temperature variation helps regulate the solubility of nickel in the solution, encouraging crystal formation.

According to exemplary embodiments, the second leachate may be evaporatively concentrated and subsequently subjected to cooling crystallization to produce a nickel-containing solid. For example, the second leachate may be evaporatively concentrated to obtain a first solution, and the first solution may be crystallized by cooling to produce a nickel-containing solid.

In some embodiments, the evaporation and concentration may be performed at a temperature of 40°C to 80°C.

Within the above temperature range, the concentration of the nickel-containing solid included in the second leachate may increase, thereby increasing the amount of nickel-containing solid produced.

In some embodiments, the cooling crystallization may be performed at a temperature of 0°C to 40°C.

Within the above temperature range, the nickel-containing solid may be formed by supersaturation.

The nickel-containing solid may be collected through a filtration process.

The filtration process may include a solid-liquid separation process, for example, using a filter press or a centrifugal dehydration process. Through the filtration process, the liquid phase may be at least partially removed and separated, and the nickel-containing solid may be recovered.

In some embodiments, the recovery yield of the nickel may be 90% or more.

The recovery yield may be calculated according to Equation 1 below.

$$\text{Recovery yield (\%)} = \left( \text{Weight of nickel included in the recovered nickel-containing solid} / \text{Weight of nickel included in the second leachate} \right) \times 100 \qquad \text{[Equation 1]}$$

In some embodiments, the recovery yield of the nickel may be 92 % or more, 93 % or more, 94 % or more, 95 % or more, or 96 % or more.

Hereinafter, specific experimental examples are proposed to facilitate understanding of the present disclosure.

**Preparative Example. Preparation of extractant preloaded with nickel**

**(1) Preparation of manganese extractant preloaded with nickel**

A manganese extractant preloaded with nickel was prepared by adding nickel sulfate to a 1 M di-(2-ethylhexyl) phosphoric acid (D2EHPA) solution that was saponified to 50%.

Specifically, a 1 M D2EHPA solution was prepared by diluting D2EHPA in kerosene, and sodium hydroxide (NaOH) was added to the diluted 1 M D2EHPA solution in an amount corresponding to 50 mol% of the D2EHPA to carry out a saponification process. Thereafter, nickel sulfate in an amount corresponding to 25 mol% of D2EHPA was added to prepare a manganese extractant preloaded with nickel.

**(2) Preparation of cobalt extractant preloaded with nickel**

A cobalt extractant preloaded with nickel was prepared by adding nickel sulfate to a 0.8 M Cyanex 272 (bis(2,4,4-trimethylpentyl)phosphinic acid) solution that was saponified to 40%.

Specifically, a saponification process was performed by adding sodium hydroxide in an amount corresponding to 40 mol% of Cyanex 272 to a 0.8 M Cyanex 272 solution. Thereafter, nickel sulfate in an amount corresponding to 20 mol% of the Cyanex 272 was added to prepare a cobalt extractant preloaded with nickel.

**Example 1**

Black powder including nickel (Ni), cobalt (Co) and manganese (Mn) in a ratio of 6:2:2 was subjected to hydrogen reduction treatment. After washing with water while adding calcium hydroxide, solid-liquid separation was performed to remove lithium hydroxide (LiOH) and produce a precipitate (NCM paste).

A 2 M sulfuric acid solution was added to the precipitate, followed by leaching for 6 hours at 80°C and 250 rpm. The leach residue was separated by centrifugation to produce a first leachate. Nickel hydroxide ($Ni(OH)_2$) and sodium fluoride (NaF) were added to the first leachate to remove impurities including calcium (Ca) and aluminum (Al).

Manganese and cobalt were extracted from the first leachate from which the impurities had been removed to produce a second leachate. Specifically, manganese was extracted by mixing the first leachate with the manganese extractant preloaded with nickel at a volume ratio of 1.4:1. In addition, cobalt was extracted by mixing the first leachate with the cobalt extractant preloaded with nickel at a volume ratio of 1.9:1.

Sulfuric acid was added to the second leachate to adjust its pH to 1. The temperature of the second leachate was maintained at 60°C, and the leachate was evaporated under reduced pressure and then cooled to 0°C to crystallize nickel sulfate. The resulting mixture was filtered and washed using a vacuum pump to obtain nickel sulfate. The pH of the second leachate was measured using a pH meter (S210, Mettler Toledo).

**Example 2**

Nickel sulfate was prepared by the same method as in Example 1, except that the content of hydrogen supplied during the hydrogen reduction treatment step was reduced, resulting in an increased lithium content in the precipitate (NCM paste).

**Example 3**

Nickel sulfate was prepared by the same method as in Example 1, except that in the step of removing impurities including calcium (Ca) and aluminum (Al) by adding nickel hydroxide ($Ni(OH)_2$) and sodium fluoride (NaF) to the first leachate, the content of sodium fluoride added was increased due to a high calcium content in the leachate.

**Example 4**

Nickel sulfate was prepared by the same method as in Example 1, except that black powder not subj ected to hydrogen reduction was added to the sulfuric acid solution instead of the precipitate (NCM paste), and NaOH was used in the step of removing impurities from the first leachate.

**Example 5**

Nickel sulfate was prepared by the same method as in Example 1, except that sodium hydroxide (NaOH) was used instead of nickel hydroxide ($Ni(OH)_2$) in the step of impurity removal from the first leachate.

**Comparative Examples 1 to 5**

Nickel sulfate was prepared by the same method as Examples 1 to 5, except that the pH of the second leachate was not adjusted. Since the pH was not adjusted, the pH of the second leachate was 5 or higher.

**Comparative Example 6**

Black powder not subjected to hydrogen reduction was added to a sulfuric acid solution, followed by leaching for 6 hours at 80°C and 250 rpm, and then the leach residue was separated by centrifugation to produce a first leachate. Impurities including calcium (Ca) and aluminum (Al) were removed by adding sodium hydroxide (NaOH) and sodium fluoride (NaF) to the first leachate.

Manganese and cobalt were sequentially extracted from the first leachate from which the impurities had been removed to produce a second leachate. Specifically, a 1 M D2EHPA solution saponified to 50% was used as a manganese extractant, and a 0.8 M Cyanex 272 solution saponified to 40% was used as a cobalt extractant to sequentially extract manganese and cobalt.

Afterwards, the temperature of the second leachate was maintained at 60°C, and the leachate was evaporated under reduced pressure and then cooled to 0°C to crystallize nickel sulfate. The resulting mixture was filtered and washed using a vacuum pump to obtain nickel sulfate.

**Experimental Example**

**(1) Analysis of composition of the second leachate**

In the examples and comparative examples, the components of the second leachate were analyzed using inductively coupled plasma (ICP) analysis. The second leachate included nickel, lithium, and sodium, and the analysis results are shown in Table 1 below.

**(2) Analysis of nickel recovery yield**

The nickel recovery yield was calculated based on the weight of nickel contained in the nickel sulfate obtained in the above-described examples and comparative examples. Specifically, the total weight of nickel included in the black powder and the total weight of nickel included in the nickel sulfate were calculated, and the recovery yield was determined according to Equation 1 below.

Recovery yield (%) = (Weight of nickel included in the recovered nickel-containing solid / Weight of nickel included in the second leachate) $\times$ 100　　　　[Equation 1]

The nickel recovery yields according to the above-described examples and comparative examples are shown in Table 1 below.

[TABLE 1]

| Classification | Content of metal elements in the second leachate (wt%) | | | Nickel recovery yield (%) |
| --- | --- | --- | --- | --- |
| | Ni | Li | Na | |
| Example 1 | 7.71 | 0.06 | 0.05 | 98.9 |
| Example 2 | 7.71 | 0.2 | 0.05 | 95.4 |
| Example 3 | 7.71 | 0.06 | 0.2 | 98.0 |
| Example 4 | 6.87 | 0.79 | 0.70 | 50.4 |
| Example 5 | 6.77 | 0.06 | 0.76 | 52.1 |
| Comparative Example 1 | 7.71 | 0.06 | 0.05 | 96.1 |
| Comparative Example 2 | 7.71 | 0.2 | 0.05 | 86.3 |
| Comparative Example 3 | 7.71 | 0.06 | 0.2 | 86.0 |
| Comparative Example 4 | 6.87 | 0.79 | 0.70 | 43.7 |
| Comparative Example 5 | 6.77 | 0.06 | 0.76 | 44.9 |
| Comparative Example 6 | 3.93 | 0.79 | 3.00 | - |

Referring to Table 1 above, the nickel recovery yields of the examples in which acid was added to the second leachate to adjust the pH were significantly improved compared to those of the comparative examples in which no acid was added to the second leachate.

In Example 4 and Comparative Example 4, in which black powder not subjected to hydrogen reduction treatment was used, the content of lithium included in the second leachate increased. In Example 4 and Comparative Example 4, where the content of lithium included in the second leachate was high, the nickel recovery yield decreased.

In Example 5 and Comparative Example 5, in which sodium hydroxide was used for impurity removal, the content of sodium included in the second leachate increased. In Example 5 and Comparative Example 5, where the content of sodium included in the second leachate was high, the nickel recovery yield decreased.

In Comparative Example 6, in which an extractant not preloaded with nickel was used, nickel sulfate complexes such as $Na_2Ni(SO_4)_2(H_2O)_4$ other than nickel sulfate were formed, making it impossible to calculate the nickel recovery yield.

**Claims**

1. A method for recovering transition metals from a lithium secondary battery comprising:

   separating a lithium-containing mixture from a waste lithium-containing mixture to prepare a transition metal-containing mixture;
   treating the transition metal-containing mixture with a first acidic solution to produce a first leachate;
   extracting transition metals excluding nickel from the first leachate to produce a second leachate;
   treating the second leachate with a second acidic solution to adjust its pH; and
   producing a nickel-containing solid from the pH-adjusted second leachate.

2. The method for recovering transition metals from a lithium secondary battery according to claim 1, wherein the step of adjusting the pH comprises adjusting the pH of the second leachate to less than 2, or 1 or less, more particularly from 0.01 to 1 or from 0.05 to 0.75.

3. The method for recovering transition metals from a lithium secondary battery according to claim 1 or claim 2, wherein the second acidic solution used in the step of adjusting the pH comprises sulfuric acid.

4. The method for recovering transition metals from a lithium secondary battery according to any one of claims 1 to 3, wherein the second leachate comprises lithium, and a content of the lithium is 0.4% by weight or less, or less than 0.2% by weight based on the total weight of the second leachate, wherein preferably the content of lithium ranges from 0.001 wt% to 0.4 wt% or from 0.001 wt% to 0.35 wt% or from 0.005 wt% to 0.3 wt% or from 0.007 wt% to 0.2wt% or from 0.01 wt% to 0.15 wt% or from 0.01 wt% to 0.1 wt%.

5. The method for recovering transition metals from a lithium secondary battery according to any one of claims 1 to 4, wherein the second leachate comprises sodium, and a content of the sodium is 0.4% by weight or less, or less than 0.2% by weight based on the total weight of the second leachate, wherein preferably the content of the sodium ranges from 0.001 wt% to 0.4 wt% or from 0.005 wt% to 0.35 wt% or from 0.007 wt% to 0.25 wt% or from 0.01 wt% to 0.2 wt% or from 0.01 wt% to 0.15 wt%, based on the total weight of the second leachate.

6. The method for recovering transition metals from a lithium secondary battery according to any one of claims 1 to 5, wherein the step of separating a lithium-containing mixture from the waste lithium-containing mixture to prepare a transition metal-containing mixture comprises:

   performing hydrogen reduction treatment on the waste lithium-containing mixture to prepare a preliminary precursor mixture including a lithium-containing mixture and a transition metal-containing mixture; and
   separating the lithium-containing mixture from the preliminary precursor mixture to produce the transition metal-containing mixture.

7. The method for recovering transition metals from a lithium secondary battery according to any one of claims 1 to 6, wherein, in the step of extracting transition metals excluding nickel from the first leachate to produce a second leachate, the transition metals excluding nickel are extracted by a transition metal extractant preloaded with nickel.

8. The method for recovering transition metals from a lithium secondary battery according to claim 7, wherein the transition metal extractant preloaded with nickel is produced by adding a nickel salt to a saponified transition metal extractant.

9. The method for recovering transition metals from a lithium secondary battery according to claim 7 or 8, wherein a ratio of a volume of the transition metal extractant preloaded with nickel to a volume of the first leachate ranges from 1.2 to 2.0 or from 1.3 to 1.9.

10. The method for recovering transition metals from a lithium secondary battery according to any one of claims 1 to 9, wherein the step of producing a nickel-containing solid comprises varying the temperature of the second leachate, wherein preferably such varying of the temperature includes evaporatively concentration of the second leachate and subsequently subjecting the second leachate to cooling crystallization to produce a nickel-containing solid, wherein further preferably such evaporation and concentration is performed at temperatures of 40°C to 80°C and such cooling crystallization is performed at temperatures of 0°C to 40°C.

11. The method for recovering transition metals from a lithium secondary battery according to any one of claims 1 to 10, wherein the transition metal excluding nickel comprises at least one of manganese and cobalt.

12. The method for recovering transition metals from a lithium secondary battery according to claim 11, wherein the step of extracting transition metals excluding nickel from the first leachate to produce a second leachate comprises sequentially extracting manganese and cobalt.

13. The method for recovering transition metals from a lithium secondary battery according to any one of claims 1 to 12, further comprising adding a basic salt to the first leachate to remove impurities.

14. The method for recovering transition metals from a lithium secondary battery according to claim 13, wherein a metal fluoride is further added to the first leachate.

15. The method for recovering transition metals from a lithium secondary battery according to claim 13 or 14, wherein the basic salt includes nickel hydroxide.

[FIG. 1]

Europäisches Patentamt

European Patent Office

Office européen des brevets

**EUROPEAN SEARCH REPORT**

Application Number

EP 25 19 4908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/054103 A1 (REMINEX [MA]) 14 March 2024 (2024-03-14) | 1-5, 7-13,15 | INV. C22B3/00 |
| Y | * example 2 * | 6 | C22B3/08 |
| A | * figure 1 * * Séparation du Co, Mn / Ni, Li; example 3 * ----- | 14 | C22B3/06 C22B3/16 C22B3/22 C22B3/26 |
| X | EP 4 282 996 A1 (ECOPRO MAT CO LTD [KR]) 29 November 2023 (2023-11-29) | 1-5, 7-13,15 | C22B3/44 C22B7/00 |
| Y | * examples 1, 4, 5 * | 6 | C22B26/12 |
| A | * paragraph [0119] * * paragraph [0093] - paragraph [0108] * * paragraph [0013] * * paragraph [0052] - paragraph [0053] * ----- | 14 | C22B47/00 ADD. C22B3/10 C22B3/38 |
| X | LIANG CHEN ET AL: "Process for the recovery of cobalt oxalate from spent lithium-ion batteries", HYDROMETALLURGY, ELSEVIER SCIENTIFIC PUBLISHING CY. AMSTERDAM, NL, vol. 108, no. 1, 28 February 2011 (2011-02-28), pages 80-86, XP028201016, ISSN: 0304-386X, DOI: 10.1016/J.HYDROMET.2011.02.010 [retrieved on 2011-03-05] | 1,7-13, 15 | H01M10/54 |
| A | * figure 14 * * item 3.4; page 83 * ----- | 14 | |
| X | KR 2015 0094412 A (TOWN MINING CO LTD [KR]) 19 August 2015 (2015-08-19) | 1,7-13, 15 | |
| Y | * paragraph [0038] - paragraph [0039] * | 6 | |
| A | * claims 1, 5 * * paragraph [0030] * ----- | 14 | |
| | | | -/-- |

TECHNICAL FIELDS SEARCHED (IPC)

C22B
H01M

The present search report has been drawn up for all claims

| Place of search | Date of completion of the search | Examiner |
|---|---|---|
| The Hague | 1 December 2025 | Fernandes Magalhaes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 19 4908

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 209 606 A1 (MITSUBISHI MATERIALS CORP [JP]) 12 July 2023 (2023-07-12) | 1,7-13, 15 | |
| A | * figure 1 * | 14 | |
| | ----- | | |
| A | SALES JENESON MEDEIROS ET AL: "Precipitation of manganese by ozone from hydrometallurgical recycling process of lithium-ion batteries", JOURNAL OF CLEANER PRODUCTION, vol. 434, 1 January 2024 (2024-01-01), page 140099, XP093273461, AMSTERDAM, NL ISSN: 0959-6526, DOI: 10.1016/j.jclepro.2023.140099 * figure 2 * | 11,12 | |
| | ----- | | |
| A | BOTELHO JUNIOR AMILTON ET AL: "Cobalt Recovery from Li-Ion Battery Recycling: A Critical Review", METALS, vol. 11, no. 12, 10 December 2021 (2021-12-10), page 1999, XP093300230, CH ISSN: 2075-4701, DOI: 10.3390/met11121999 * figure 2 * | 11-13,15 | TECHNICAL FIELDS SEARCHED (IPC) |
| | ----- | | |

The present search report has been drawn up for all claims

| Place of search | Date of completion of the search | Examiner |
|---|---|---|
| The Hague | 1 December 2025 | Fernandes Magalhaes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 25 19 4908

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2025

| Patent document cited in search report | | Publication date | Patent family member(s) | | Publication date |
|---|---|---|---|---|---|
| WO 2024054103 | A1 | 14-03-2024 | EP | 4590871 A1 | 30-07-2025 |
| | | | MA | 57762 A1 | 29-03-2024 |
| | | | WO | 2024054103 A1 | 14-03-2024 |
| EP 4282996 | A1 | 29-11-2023 | CA | 3186428 A1 | 08-10-2023 |
| | | | EP | 4282996 A1 | 29-11-2023 |
| | | | US | 2024117463 A1 | 11-04-2024 |
| KR 20150094412 | A | 19-08-2015 | NONE | | |
| EP 4209606 | A1 | 12-07-2023 | AU | 2021337975 A1 | 23-03-2023 |
| | | | CN | 116096929 A | 09-05-2023 |
| | | | CN | 120536732 A | 26-08-2025 |
| | | | EP | 4209606 A1 | 12-07-2023 |
| | | | KR | 20230061356 A | 08-05-2023 |
| | | | TW | 202221145 A | 01-06-2022 |
| | | | US | 2023313337 A1 | 05-10-2023 |
| | | | WO | 2022050248 A1 | 10-03-2022 |

EPO FORM P0459

For more details about this annex : see Official Journal of the European Patent Office, No. 12/82